# EUROPEAN PATENT SPECIFICATION

(11) **EP 4 374 137 B1**
(45) Date of publication and mention of the grant of the patent: **01.07.2026**
(21) Application number: 22755296.5
(22) Date of filing: 20.07.2022
(51) Int. Cl.: G01C 22/02, B60K 23/04, B62D 9/00, B60L 15/20, B60K 6/445, B62D 11/02, A61G 5/04, G05D 1/00, B60L 3/00, B62D 11/04

(54) **METHOD OF CORRECTION OF ODOMETRY ERRORS DURING THE AUTONOMOUS DRIVE OF A WHEEL-EQUIPPED APPARATUS AND CONTROL UNIT THEREOF**
VERFAHREN ZUR KORREKTUR VON ODOMETRIEFEHLERN WÄHREND DES AUTONOMEN ANTRIEBS EINER MIT RÄDERN AUSGESTATTETEN VORRICHTUNG UND STEUEREINHEIT DAFÜR
PROCÉDÉ DE CORRECTION D'ERREURS ODOMÉTRIQUES LORS DE L'ENTRAÎNEMENT AUTONOME D'UN APPAREIL ÉQUIPÉ D'UNE ROUE ET SON UNITÉ DE COMMANDE

(30) Priority: 21.07.2021 IT 202100019280
(43) Date of publication of application: 29.05.2024
(73) Proprietor: Alba-Robot Srl, 10128 Torino (TO) (IT)
(72) Inventor: BERTAIA, Andrea, 10128 Torino (TO) (IT)
(74) Representative: Metroconsult Srl
(86) International application number: PCT/IB2022/056703
(87) International publication number: WO 2023/002403

(56) References cited:
- US-A- 4 549 624
- US-A- 5 469 928
- US-A1- 2007 295 545
- US-A1- 2021 055 738
- US-B1- 6 530 442

## Description

The present invention relates to a method of correction of odometry errors during the autonomous drive of a wheel-equipped apparatus, in accordance with the preamble of claim 1. In particular, a method of correction of odometry errors during the autonomous drive of a wheel-equipped apparatus and a relative control unit is illustrated. Documents US2021/0055738A1, US4549624 and US6530442B1 relate to methods of correction of a similar type.

The field of use of the present invention concerns the autonomous drive of wheelchairs, carriages, stretchers, trolleys or similar wheel-equipped apparatuses in enclosed environments such as for example hospitals, airports, shopping centres and so on, for which current geolocation systems are ineffective.

Currently, autonomous-drive systems for wheel-equipped apparatuses are known, such as for example the system indicated in US patent application US2017266069, in which an autonomous-drive wheelchair is described.

These systems can be used for the movement of people and/or things within enclosed environments in which geolocation systems, such as for example the GPS and/or GALILEO system, are not effective for locating the wheel-equipped apparatuses in the aforesaid environments.

This is due to the strong attenuation suffered by the electromagnetic signals used by such geolocation systems within enclosed environments.

To overcome this inefficiency of the geolocation systems within enclosed environments, autonomous-drive systems for enclosed environments can use odometry techniques. These techniques make it possible to estimate the position of an autonomous-drive wheel-equipped apparatus based on information coming from sensors that measure, during a time of movement of the wheel-equipped apparatus, the space travelled by some of the wheels of the wheel-equipped apparatus itself starting from a known initial position.

Such odometry techniques are very sensitive to the errors introduced in the measurements of the sensors during the period of movement of the wheel-equipped apparatus itself, e.g. such errors may be relevant at the beginning of the measurements of the sensors, when the wheel-equipped apparatus is in its initial position, particularly if the wheel-equipped apparatus is equipped with pivoting wheels free to assume any direction.

The object of the present invention is therefore to solve these and other problems of the prior art, in particular to indicate a method, and a relative control unit, of correction of odometry errors during the autonomous drive of a wheel-equipped apparatus in enclosed environments, without the aid of geolocation systems.

Another object of the present invention is to indicate a method, and a relative control unit, of correction of odometry errors during the autonomous drive of a wheel-equipped apparatus provided with at least one pivoting wheel free to assume any direction.

A further object of the present invention is to indicate a method, and a relative control unit, of correction of odometry errors during the autonomous drive of a wheel-equipped apparatus that allow to minimize a differential value between a current position and a predefined position of the wheel-equipped apparatus.

The invention described herein consists of a control unit for an autonomous-drive wheel-equipped apparatus, and the relative method, of correction of odometry errors during the autonomous drive of the apparatus itself, which allows considering in real time the directions assumed by at least one pivoting wheel free to assume any direction.

Further advantageous features of the present invention are the subject of the accompanying claims which form an integral part of the present disclosure.

The invention will be described in detail below through non-limiting examples of embodiments with particular reference to the accompanying figures, in which:
- Figure 1a schematically represents an example of an autonomous-drive wheel-equipped apparatus according to an embodiment of the present invention;
- Figures 1b and 1c schematically represent, respectively in a perspective view and from above, an example of pivoting wheel of the autonomous-drive wheel-equipped apparatus of Figure 1a;
- Figure 2 represents an exemplary block diagram of a control unit of the autonomous-drive wheel-equipped apparatus in Figure 1a;
- Figure 3 represents an example flowchart of a method of correction of odometry errors during the autonomous drive of the wheel-equipped apparatus in Figure 1a.

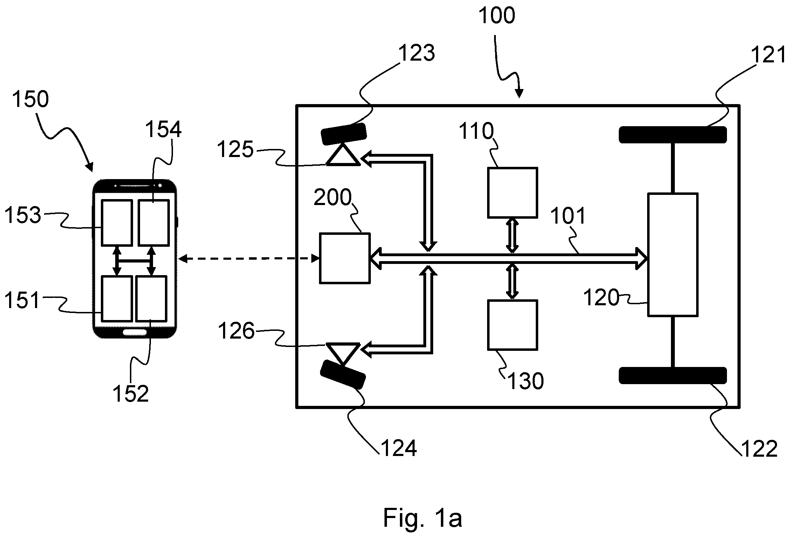

With reference to Figure 1a, an autonomous-drive wheel-equipped apparatus 100 is schematically represented. Such wheel-equipped apparatus 100 may comprise drive means 120 operatively connected to at least two drive wheels, 121, 122, at least one pivoting wheel, 123, 124, operatively connected to sensor means, 125, 126, and a control unit 200 operatively connected to the drive means 120 and to the sensor means 125, 126.

For example, in the present embodiment of the invention, the autonomous-drive wheel-equipped apparatus 100 comprises a first drive wheel 121 and a second drive wheel 122, operatively connected to the drive means 120 by means of mechanical elements, such as for example gears, belts, drive axles, bearings, and so on.

The drive means 120 may comprise for example a first electric motor operatively connected to the first drive wheel 121 and a second electric motor operatively connected to the second drive wheel 122.

The control unit 200 is adapted to control the drive means 120 to carry out the autonomous drive of the wheel-equipped apparatus 100. The control unit 200 may generate a control signal of the drive means 120, which may be represented by an analogue or digital signal. This control signal can be transmitted to the drive means 120 via a data/power bus 101 adapted to operatively connect the control unit 200 to the drive means. For example, the control signal may operate the first electric motor and/or the second electric motor, in such a way that each drive wheel may be driven independently of the other.

In addition, the wheel-equipped apparatus 100 may comprise a first pivoting wheel 123 and a second pivoting wheel 124, wherein the first pivoting wheel 123 is operatively connected to first sensor means 125 while the second pivoting wheel 124 may be operatively connected to second sensor means 126; such sensor means 126, 127 may for example comprise one encoder each.

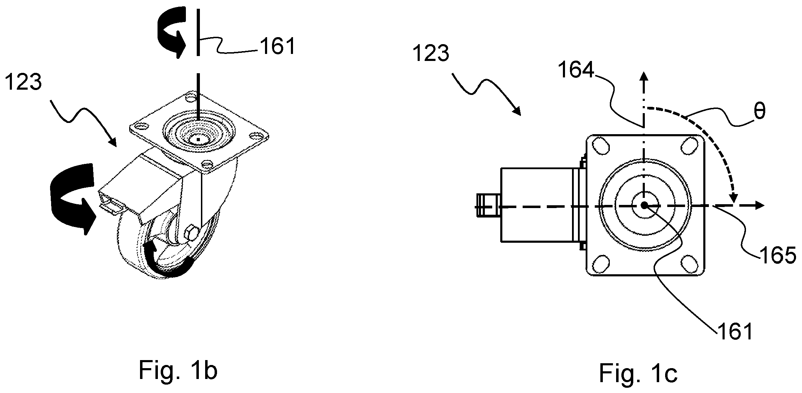

Referring to Figures 1b and 1c, the first pivoting wheel 123, or equivalently the second pivoting wheel 124, free to assume any direction are represented, i.e., each pivoting wheel 123, 124 can rotate 360° with respect to an axis of rotation 161 substantially perpendicular to a rest surface (not shown in the figures) of each pivoting wheel 123, 124, on which each pivoting wheel 123, 124 can roll.

The sensor means 125, 126, are adapted to acquire an angle of rotation θ, of said at least one pivoting wheel 123, 124, with respect to the axis of rotation 161, the angle of rotation θ being comprised between a first predefined reference direction 164 and a second variable orientation direction 165 of each pivoting wheel 123,124. For example, the first predefined reference direction 164 and the second variable orientation direction 165 may define a plane (not shown in Figures 1b and 1c) perpendicular to the axis of rotation 161. For example, the second variable orientation direction 165 may be perpendicular to the direction of an angular momentum of rotation of each pivoting wheel 123,124.

The angle of rotation θ, of said at least one pivoting wheel 123, 124, may be represented by an analogue or digital signal at the output from the sensor means 125, 126, which may be transmitted to the control unit 200 via the data/power bus 101 adapted to operatively connect the control unit 200 to the sensor means 125, 126.

In an embodiment of the invention, the wheel-equipped apparatus 100 may optionally comprise command means 110 (Figure 1a) adapted to control the drive means 120, wherein the command means 110 are adapted to be manually operated by a user. The command means 110 may comprise, for example, joysticks, buttons, and so on. The command means 110 may be operatively connected to the drive means 120, for example via the data/power bus 101 adapted to transport the output signals from the command means 110 to the drive means 120.

The wheel-equipped apparatus 100 may comprise power supply means 130 (Figure 1a) that supply power to the drive means 120, to the control unit 200, to the sensor means 123, 124, and to the command means 110 when present. The power supply means 130 may comprise for example one or more lithium, nickel/cadmium batteries and so on and may comprise devices adapted to charge such batteries, such as for example inverters or power supplies. The power supply means 130 may, for example, supply power to the drive means 120, to the control unit 200, to the sensor means 123, 124 and to the command means 110, when present, via the data/power bus 101.

The set of said power supply means 130, drive means 120, sensor means 125, 126, control unit 200 and command means 110, if present, can be operatively connected to each other, for example via the data/power bus 101, forming an autonomous-drive propulsion system of the wheel-equipped apparatus 100, like for example schematically shown in Figure 1a. For example, the data/power bus 101 may comprise a digital interface such as for example CANBUS, RS485, and so on or it may comprise an analogue interface.

In accordance with the present embodiment of the invention, a management unit 150 is adapted to manage the autonomous drive of at least one wheel-equipped apparatus 100. The management unit 150 may be used by the user, for example, to set a path of said at least one wheel-equipped apparatus 100 and to display said path to the user himself.

The management unit 150 may comprise, for example, a memory 151, an interface module 152, an input/output module 153, and a processor 154 operatively connected to each other; the management unit 150 may be, for example, a computer, a smartphone, a tablet, and so on.

The memory 151 of the management unit 150 is adapted to store inside it information relating to the autonomous drive of at least one wheel-equipped apparatus 100. Such information may, for example, comprise the data coming from the control unit 200, such as for example the values of position, velocity, operation status of the wheel-equipped apparatus 100, maps of at least a portion of the environment in which the wheel-equipped apparatus 100 operates, and so on.

The information is transmitted and/or received by the management unit 150 in communication with the control unit 200 via the interface module 152 which may be for example a USB, ETHERNET, Wi-Fi, Bluetooth, GSM interface and so on. For example, in the present embodiment of the invention, the control unit 200 may be connected to the interface module 152 of the management unit 150 via a Bluetooth interface.

The input/output module 153 allows the user to interact with the management unit 150. The input/output module may comprise output and input means, such as for example a display and an alphanumeric keypad respectively, or alternatively a touchscreen display in which an alphanumeric keypad and interactive symbols are displayed.

The processor 154 of the management unit 150 is adapted to process the information contained in the memory 151 of the management unit 150, for example in such a way as to generate one or more paths for the wheel-equipped apparatus 100. The processor 154 of the management unit 150 is adapted to display by means of said input/output module 153 the maps generated and/or the operating status of the control unit 200.

The management unit 150 may for example be implemented through a computer product, comprising portions of software code, loadable into a memory of a smartphone, tablet or of a computer equipped with interface means such as for example the USB, ETHERNET, Wi-Fi, Bluetooth, GSM interface and so on.

In one embodiment of the invention, the management unit 150 may be a user smartphone which is connected via the interface module 152 to the control unit 200 of the wheel-equipped apparatus 100, such as for example a wheelchair used by the user himself, wherein the control unit 200 is adapted to autonomously drive the wheel-equipped apparatus 100, also as a function of the information exchanged with the management unit 150.

In a further embodiment of the invention, the control unit 200 is adapted to autonomously drive the wheel-equipped apparatus 100 as a function of the information recorded therein.

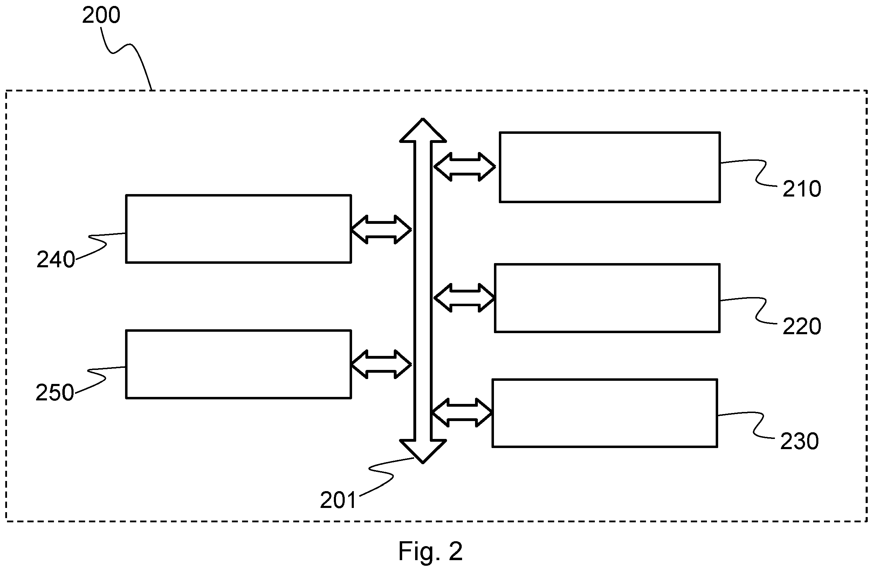

Figure 2 represents an exemplary block diagram of the control unit 200 for correcting odometry errors during the autonomous drive of the wheel-equipped apparatus 100 of Figure 1a. The control unit 200 may comprise communication means 230, interface means 220, further sensor means 210, storage means 240, and processing means 250. These may be interconnected via a communication bus 201.

The communication means 230 are adapted to establish a communication channel with at least one management unit 150. The communication means 230 may comprise, for example, a USB, CANBUS, ETHERNET, Wi-Fi, Bluetooth, GSM interface, and so on.

The interface means 220 are adapted to receive and transmit input/output information of the control unit 200. The interface means 220 may comprise, for example, a screen for displaying the path of the wheel-equipped apparatus 100, a microphone for vocally commanding the movement of the wheel-equipped apparatus 100, a speaker for audio communications with a remote operator; the screen, the microphone and the speaker may be for example housed in a control panel of the control unit 200. The control unit 200 may comprise a video camera and/or a barcode/RFID reader, for example in order to determine the initial position in which the wheel-equipped apparatus 100 is located.

The further sensor means 210 are adapted to acquire the values of quantities inherent to said control unit 200. For example, the further sensor means 210 may acquire physical quantities useful for the autonomous drive of the wheel-equipped apparatus 100, such as for example accelerometers, speedometers, and so on. The further sensor means 210 may comprise, for example, an inertial measurement unit or inertial IMU platform and encoders operatively connected to the drive wheels 121, 122. The further sensor means 210 may also comprise one or more radars or infrared sensors in such a way as to obtain information useful for avoiding collisions, for example by performing a vertical scan in such a way as to detect the presence of obstacles and/or differences in height (steps) located along a path of the wheel-equipped apparatus 100.

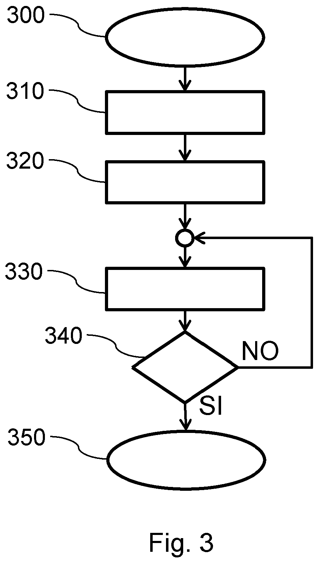

The storage means 240 are adapted to store the information and the instructions of the control unit 200 for correcting odometry errors during the autonomous drive of the wheel-equipped apparatus 100, according to the present embodiment of the invention, and may comprise for example a flash-type solid state memory. The information may comprise at least one angle of rotation θ, of said at least one pivoting wheel 123,124, acquired by the sensor means 125,126, and a set of values and/or parameters useful for the autonomous drive of the wheel-equipped apparatus 100, such as for example a set of maps for the autonomous drive of the wheel-equipped apparatus 100, the status of the inputs and of the outputs of the interface means 220, values of various physical quantities acquired by the further sensor means 210, such as for example values of temperature, electrical current, electrical voltage, and so on. The instructions stored in the storage means 240 will be described in detail below, with reference to the flowchart of Figure 3.

The processing means 250 are adapted to process the information and the instructions stored in the storage means 240, with reference to the communication means 230, to the interface means 220 and may comprise for example an ARM multicore type processor, an Arduino type microcontroller and so on. The processing means 250 perform low-level operations such as for example Path-Finding, Real-Time-Obstacle-Avoidance, and Tip-Over-Prevention operations in Safety-Critical mode, according to the reference standards. The processing means 250 may establish a communication between the control unit 200 and the management unit 150, using the communication means 230. The processing means 250 can process the information and the instructions stored in the storage means 240, with reference to the communication means 230 and to the interface means 220 and can perform high-level operations such as for example Off-Line-Obstacle-Avoidance operations, based on one or more static maps stored in said storage means 240. The processing means 250 may implement telecommunication functions, via the communication means 230, for example with a remote server, with an elevator, and with other home automation devices. The processing means 250 may implement advanced functions such as for example voice recognition of the user commands acquired by the microphone of the control unit 200.

The communication bus 201 is adapted to interconnect said communication means 230, interface means 220, further sensor means 210 and said storage means 240 to the processing means 250.

With reference to Figure 3, an exemplary method of correction of odometry errors during the autonomous drive of the wheel-equipped apparatus 100 is described. As described above, said wheel-equipped apparatus 100 comprises the drive means 120 operatively connected to at least two drive wheels 121, 122, at least one pivoting wheel 123,124 operatively connected to the sensor means 125,126 and the control unit 200 operatively connected to the drive means 120 and to the sensor means 125,126.

At step 300, an initialization phase of the control unit 200 is carried out that allows its implementation. For example, in this step the processing means 250 verify the operating status of the drive means 120, of the sensor means 125,126 and of the remaining components of the wheel-equipped apparatus 100, for example the power supply means 130 and the command means 110, if present.

At step 310, the control unit 200 determines the initial position of the wheel-equipped apparatus 100. For example, during this phase, the control unit 200 can determine this initial position via the interface means 220 comprising an RFID sensor capable of reading one or more tags previously positioned at different locations in an enclosed environment. For example, each tag can be associated with a pair of coordinates specifying a point on a predefined map of the enclosed environment. The wheel-equipped apparatus 100 by positioning itself in the vicinity of the tag can then acquire its initial position with reference to the predefined map, this map having been previously stored in the storage means 240.

Additionally or alternatively, the control unit 200 can determine the initial position via the interface means 220 comprising a video camera, or equivalently a camera, capable of reading one or more barcodes, or QR-codes, previously located at different positions in the enclosed environment. For example, each barcode, or QR-code, can be associated with a pair of coordinates specifying a point on the predefined map of the enclosed environment. The wheel-equipped apparatus, by positioning itself near the barcode, or QR-code, and by scanning it, can acquire its initial position with reference to this predefined map.

Additionally or alternatively, the control unit 200 can determine this initial position via the interface means 220 comprising the video camera, or equivalently the camera, recognising the enclosed environment by means of image-recognition techniques. For example, the video camera, or the camera, may acquire an image of a part of the enclosed environment in which the wheel-equipped apparatus 100 is positioned, and subsequently the control unit 200 may thus recognise the image of the environment to which the pair of coordinates specifying a point on the predefined map of the enclosed environment is associated. In this way, the wheel-equipped apparatus 100, by performing environmental recognition, can determine its initial position.

Additionally or alternatively, the initial position of the wheel-equipped apparatus 100 can be acquired by the control unit 200 via the interface means 220 comprising, for example, a touchscreen display in which the predefined map is displayed. The user, by touching the touchscreen display of the interface means 220, can select a point in the predefined map corresponding to the initial position of the wheel-equipped apparatus 100. Additionally or alternatively, the user may perform similar operations using the management unit 150 described above, i.e., the user by touching a touchscreen display of the management unit 150 may select a point in the predefined map corresponding to the initial position of the wheel-equipped apparatus 100. This initial position can then be transmitted from the management unit 150 in communication to the control unit 200. Finally, the initial position of the wheel-equipped apparatus 100 may be stored in the storage means 240.

At step 320, the control unit 200 determines a final position of the wheel-equipped apparatus 100. For example, this final position can be represented by a pair of coordinates corresponding to a point in said predefined map. The final position of the wheel-equipped apparatus 100 can be acquired by the control unit 200 via the interface means 220 comprising the touchscreen display in which the predefined map is displayed. The user, by touching the touchscreen display of the interface means 220, can select a point in the predefined map corresponding to the final position of the wheel-equipped apparatus 100. Additionally or alternatively, the user may perform similar operations using the management unit 150, i.e., the user by touching the touchscreen display of the management unit 150 may select a point in the predefined map corresponding to the final position of the wheel-equipped apparatus 100. This position can then be transmitted from the management unit 150 in communication to the control unit 200.

Finally, the final position of the wheel-equipped apparatus 100 may be stored in the storage means 240.

At step 330, the control unit 200 autonomously drives the wheel-equipped apparatus 100 from the initial position to the final position following at least one predefined path of the associated predefined map of the enclosed environment in which the wheel-equipped apparatus 100 moves. The predefined path is represented as a collection of predefined positions, wherein each predefined position can be represented by means of a pair of coordinates corresponding to a point on said predefined map. For example, during this step, the control unit 200 may generate the control signal of the drive means 120 to perform the autonomous drive of the wheel-equipped apparatus 100.

During this step, the control unit 200 may determine the current position of the wheel-equipped apparatus 100 by means of odometry techniques. For example, the current position can be represented by a pair of coordinates corresponding to a point on said predefined map. The control unit 200 may estimate the current position of the wheel-equipped apparatus 100 as a function of the information received from the further sensor means 210. For example, the control unit 200 may calculate the current position using signals coming from the encoders operatively connected to each drive wheel 121, 122. The signals coming from the encoders may represent the number of revolutions of each drive wheel 121, 122, consequently, the control unit 200 can calculate the current position of the wheel-equipped apparatus 100 on the basis of the number of revolutions and of the geometric dimensions of each drive wheel 121, 122. For example, the control unit 200 can determine the current position by calculating a displacement, performed by the wheel-equipped apparatus 100, multiplying the number of revolutions detected by each encoder by a circumference length of the corresponding drive wheel 121, 122 and vectorically summing said displacement to the initial position, and so on for the subsequent current positions.

During step 330, the sensor means 125,126 acquire the angle of rotation θ comprised between the first predefined reference direction 164 and the second variable orientation direction 165 of the pivoting wheel 123, 124.

For example, in the present embodiment of the invention, the first sensor means 125 may acquire a first angle of rotation θ1 comprised between the first predefined reference direction 164 and the second variable orientation direction 165 of the first pivoting wheel 123, while the second sensor means 126 may acquire a second angle of rotation θ2 comprised between the first predefined reference direction 164 and the second variable orientation direction 165 of the second pivoting wheel 123.

The first angle of rotation θ1 of the first pivoting wheel 123 may be represented by a first analogue or digital signal at the output from the first sensor means 125 that may be transmitted to the control unit 200 via the data/power bus 101. Analogously, the second angle of rotation θ2 of the second pivoting wheel 124 can be represented by a second analogue or digital signal at the output from the second sensor means 126 that may be transmitted to the control unit 200 via the data/power bus 101.

During step 330, the control unit 200 generates a corrective signal that controls the drive means 120 in such a way as to independently operate the two drive wheels 121, 122, on the basis of the angle of rotation θ of at least one pivoting wheel 123,124. For example, in the present embodiment of the invention, the control unit 200 can generate the corrective signal on the basis of the first angle of rotation θ1 and/or of the second angle of rotation θ2. The corrective signal may be represented by an analogue or digital signal that may be transmitted to the drive means 120 via the data/power bus 101.

The corrective signal controls the drive means 120 in such a way as to independently operate the two drive wheels 121, 122, generating an angular velocity difference between said at least two drive wheels 121, 122 on the basis of the angle of rotation θ of said at least one pivoting wheel 123,124.

For example, in the present embodiment of the invention, the control unit 200 can generate the angular velocity difference on the basis of the first angle of rotation θ1 and/or of the second angle of rotation θ2.

In particular, the first drive wheel 121 may rotate with a first angular velocity, independently of the second drive wheel 122, which may rotate with a second angular velocity. This results in the generation of the angular velocity difference between the two drive wheels 121, 122. Consequently, the angular velocity difference results in a rotation, even only partial, of the wheel-equipped apparatus 100 which advantageously allows to change the current position of the wheel-equipped apparatus 100 itself. In this way, the wheel-equipped apparatus 100 can roto-translate in such a way as to advantageously correct its direction of movement.

The control unit 200 can determine this torque difference so as to minimize a differential value between the current position and the predefined position of the wheel-equipped apparatus 100, i.e., so as to minimize the odometry errors relative to the position of the wheel-equipped apparatus 100 deriving from the odometry techniques discussed above. This allows the control unit 200 to autonomously drive the wheel-equipped apparatus 100 from the initial position to the final position advantageously minimizing the odometry errors relative to the predefined path.

For this purpose, the control unit 200 can determine the angular velocity difference between the first drive wheel 121 and the second drive wheel 122 in accordance with a predefined function having as arguments at least one angle of rotation θ, such as for example the first angle of rotation θ1 and/or the second angle of rotation θ2. In addition, the predefined function can have as arguments one or more values deriving from the further sensor means 210. This predefined function can be determined in accordance with one or more of the following known algorithms: Kalmar filters, Linear-Prediction and Proportional-Integral-Derivative control, PID.

Additionally or alternatively, the control unit 200 may determine the angular velocity difference between the first drive wheel 121 and the second drive wheel 122 in accordance with an output signal of a previously trained neural network having as input signal at least one angle of rotation θ, of at least one pivoting wheel 123,124, such as for example the first angle of rotation θ1 and/or the second angle of rotation θ2. In addition, the neural network can have as input signals one or more values deriving from the further sensor means 210.

The training of the neural network may involve the continuous recording of the angle of rotation θ, of at least one pivoting wheel 123,124, and of the difference between the current position and the predefined position of the wheel-equipped apparatus 100, the predefined position being obtained with Motion-Capture systems, such as for example the Vicon type system (https://www.vicon.com/) during the training of the neural network itself.

At step 340, the control unit 200 checks whether the wheel-equipped apparatus 100 has reached the final position, e.g. within a predefined error margin. If the final position has not been reached, the control unit executes step 330, otherwise it executes step 350.

At step 350, the control unit 200 performs a termination phase in which all the operations necessary to terminate the autonomous drive of the wheel-equipped apparatus 100 are performed. During this step, the control unit 200 may signal the inoperative status of the wheel-equipped apparatus 100, for example by means of luminous and/or acoustic indicators, such as LED indicators and/or buzzers included in the wheel-equipped apparatus 100 itself.

The advantages of the present invention are therefore evident from the description made. The method and the relative control unit, of correction of odometry errors during the autonomous drive of a wheel-equipped apparatus, advantageously allow to effectively move, according to a predefined path, the wheel-equipped apparatus in enclosed environments without the aid of geolocation systems.

Advantageously, the method and the relative control unit, according to the present invention, make it possible to detect in real time the direction of the at least one pivoting wheel, of the wheel-equipped apparatus, free to assume any direction and to correct in real time the path of the wheel-equipped apparatus according to this detected direction, in such a way as to minimize the odometry error of the wheel-equipped apparatus itself during its autonomous drive.

Naturally, the principle of the invention remaining the same, the embodiments and details of construction can be widely varied with respect to what has been described and illustrated purely by way of non-limiting example.

## Claims

1. Method of correction of errors during the autonomous drive of a wheel-equipped apparatus (100) comprising drive means (120) operatively connected to at least two drive wheels (121, 122), at least one pivoting wheel (123,124) operatively connected to sensor means (125,126) and a control unit (200) operatively connected to said drive means (120) and to said sensor means (125,126), said method comprising:
- a step (310) wherein the control unit (200) determines an initial position of the wheel-equipped apparatus (100);
- a step (320) wherein the control unit (200) determines a final position of the wheel-equipped apparatus (100);
- a step (330) wherein the control unit (200) autonomously drives the wheel-equipped apparatus (100) from the initial position to the final position following at least one predefined path of an associated predefined map of an enclosed environment in which the wheel-equipped apparatus (100) moves, said predefined path being represented as a collection of predefined positions and wherein each predefined position is represented by means of a pair of coordinates corresponding to a point on said predefined map,
said step (330) of autonomous drive of the wheel-equipped apparatus (100) comprising:
- an acquisition phase, wherein said sensor means (125,126) acquire an angle of rotation (θ) of said at least one pivoting wheel (123,124) with respect to an axis of rotation (161) substantially perpendicular to a rest surface of said at least one pivoting wheel (123,124);
- a generation phase, wherein said control unit (200) generates a corrective signal that controls said drive means (120) in such a way as to independently operate said at least two drive wheels (121, 122) on the basis of the angle of rotation (θ) of said at least one pivoting wheel (123,124),
wherein, during said generation phase, said corrective signal controls said drive means (120) in such a way as to generate an angular velocity difference between said at least two drive wheels (121, 122) on the basis of said angle of rotation (θ) of said at least one pivoting wheel (123,124), and wherein said angular velocity difference minimizes a differential value between a current position and one of the predefined positions of said wheel-equipped apparatus (100).

2. Method according to claim 1, wherein said control unit (200) determines the angular velocity difference between said at least two drive wheels (121, 122) in accordance with a predefined function having as arguments at least said angle of rotation (θ) of said at least one pivoting wheel (123,124).

3. Method according to claim 1 or 2, wherein said control unit (200) determines the angular velocity difference between said at least two drive wheels (121, 122) in accordance with an output signal of a previously trained neural network having as input signal at least said angle of rotation (θ) of said at least one pivoting wheel (123,124).

4. Control unit (200) for correcting odometry errors during the autonomous drive of a wheel-equipped apparatus (100) comprising drive means (120) operatively connected to at least two drive wheels (121, 122) and at least one pivoting wheel (123,124) operatively connected to sensor means (125,126) adapted to acquire an angle of rotation (θ) of said at least one pivoting wheel (123,124) with respect to an axis of rotation (161) substantially perpendicular to a rest surface of said at least one pivoting wheel (123,124),
the control unit (200) being configured to determine an initial position and a final position of the wheel-equipped apparatus (100), the control unit (200) being configured to autonomously drive the wheel-equipped apparatus (100) from the initial position to the final position following at least one predefined path of an associated predefined map of an enclosed environment in which the wheel-equipped apparatus (100) moves, said predefined path being represented as a collection of predefined positions and wherein each predefined position is represented by means of a pair of coordinates corresponding to a point on said predefined map,
said control unit (200) being operatively connected to said drive means (120) and to said sensor means (125,126) and being adapted to generate a corrective signal for controlling said drive means (120) in such a way as to independently operate said at least two drive wheels (121, 122) on the basis of the angle of rotation (θ) of said at least one pivoting wheel (123,124).
wherein said corrective signal is adapted to control said drive means (120) in such a way as to generate an angular velocity difference between said at least two drive wheels (121, 122) on the basis of said angle of rotation (θ) of said at least one pivoting wheel (123,124), said angular velocity difference being adapted to minimize a differential value between a current position and a predefined position of said wheel-equipped apparatus (100).

5. Control unit (200) according to claim 4, wherein said control unit (200) is adapted to determine the angular velocity difference between said at least two drive wheels (121, 122) in accordance with a predefined function having as arguments at least said angle of rotation (θ) of said at least one pivoting wheel (123,124).

6. Control unit (200) according to claim 4 or 5, wherein said control unit (200) is adapted to determine the angular velocity difference between said at least two drive wheels (121, 122) in accordance with an output signal of a previously trained neural network having as input signal at least said angle of rotation (θ) of said at least one pivoting wheel (123,124).

7. Autonomous-drive wheel-equipped apparatus (100) comprising drive means (120) operatively connected to at least two drive wheels (121, 122), at least one pivoting wheel (123,124) operatively connected to sensor means (125,126) and the control unit (200) of claim 4, wherein said sensor means (125,126) are adapted to acquire an angle of rotation (θ) of said at least one pivoting wheel (123,124) with respect to an axis of rotation (161) substantially perpendicular to a rest surface of said at least one pivoting wheel (123, 124).

8. Wheel-equipped apparatus (100) according to claim 7, wherein said control unit (200) is adapted to determine the angular velocity difference between said at least two drive wheels (121, 122) in accordance with a predefined function having as arguments at least said angle of rotation (θ) of said at least one pivoting wheel (123,124).

9. Wheel-equipped apparatus (100) according to claim 7 or 8, wherein said control unit (200) is adapted to determine the angular velocity difference between said at least two drive wheels (121, 122) in accordance with an output signal of a previously trained neural network having as input signal at least said angle of rotation (θ) of said at least one pivoting wheel (123,124).

## Patentansprüche

1. Verfahren zur Fehlerkorrektur während des autonomen Fahrens einer mit Rädern ausgestatteten Vorrichtung (100), die Antriebsmittel (120), die funktionell mit mindestens zwei Antriebsrädern (121, 122) verbunden sind, mindestens ein Schwenkrad (123, 124), das funktionell mit Sensormitteln (125, 126) verbunden ist, und eine Steuereinheit (200) umfasst, die funktionell mit den Antriebsmitteln (120) und mit den Sensormitteln (125, 126) verbunden ist, wobei das Verfahren umfasst:
- einen Schritt (310), in dem die Steuereinheit (200) eine Anfangsposition der mit Rädern ausgestatteten Vorrichtung (100) ermittelt;
- einen Schritt (320), in dem die Steuereinheit (200) eine Endposition der mit Rädern ausgestatteten Vorrichtung (100) ermittelt;
- einen Schritt (330), in dem die Steuereinheit (200) die mit Rädern ausgestattete Vorrichtung (100) autonom von der Anfangsposition zur Endposition entlang mindestens eines vordefinierten Pfads einer zugehörigen vordefinierten Karte einer geschlossenen Umgebung, in der sich die mit Rädern ausgestattete Vorrichtung (100) bewegt, fährt, wobei der vordefinierte Pfad als eine Sammlung von vordefinierten Positionen dargestellt ist und wobei jede vordefinierte Position mittels eines Paars von Koordinaten dargestellt ist, das einem Punkt auf der vordefinierten Karte entspricht,
wobei der Schritt (330) des autonomen Fahrens der mit Rädern ausgestatteten Vorrichtung (100) umfasst:
- eine Erfassungsphase, in der die Sensormittel (125, 126) einen Drehwinkel (θ) des mindestens einen Schwenkrads (123, 124) in Bezug auf eine Drehachse (161) erfassen, die im Wesentlichen senkrecht zu einer Auflagefläche des mindestens einen Schwenkrads (123, 124) verläuft;
- eine Erzeugungsphase, in der die Steuereinheit (200) ein Korrektursignal erzeugt, das die Antriebsmittel (120) derart steuert, dass die mindestens zwei Antriebsräder (121, 122) auf der Grundlage des Drehwinkels (θ) des mindestens einen Schwenkrads (123, 124) unabhängig voneinander betrieben werden,
wobei während der Erzeugungsphase das Korrektursignal die Antriebsmittel (120) derart steuert, dass eine Winkelgeschwindigkeitsdifferenz zwischen den mindestens zwei Antriebsrädern (121, 122) auf der Grundlage des Drehwinkels (θ) des mindestens einen Schwenkrads (123, 124) erzeugt wird, und wobei die Winkelgeschwindigkeitsdifferenz einen Differenzwert zwischen einer aktuellen Position und einer der vordefinierten Positionen der mit Rädern ausgestatteten Vorrichtung (100) minimiert.

2. Verfahren nach Anspruch 1, wobei die Steuereinheit (200) die Winkelgeschwindigkeitsdifferenz zwischen den mindestens zwei Antriebsrädern (121, 122) gemäß einer vordefinierten Funktion ermittelt, die als Argumente mindestens den Drehwinkel (θ) des mindestens einen Schwenkrads (123, 124) aufweist.

3. Verfahren nach Anspruch 1 oder 2, wobei die Steuereinheit (200) die Winkelgeschwindigkeitsdifferenz zwischen den mindestens zwei Antriebsrädern (121, 122) gemäß einem Ausgangssignal eines zuvor trainierten neuronalen Netzes ermittelt, das als Eingangssignal mindestens den Drehwinkel (θ) des mindestens einen Schwenkrads (123, 124) aufweist.

4. Steuereinheit (200) zur Korrektur von Odometriefehlern während des autonomen Fahrens einer mit Rädern ausgestatteten Vorrichtung (100), die Antriebsmittel (120), die funktionell mit mindestens zwei Antriebsrädern (121, 122) verbunden sind, und mindestens ein Schwenkrad (123, 124) umfasst, das funktionell mit Sensormitteln (125, 126) verbunden ist, die dazu eingerichtet sind, einen Drehwinkel (θ) des mindestens einen Schwenkrads (123, 124) in Bezug auf eine Drehachse (161) zu erfassen, die im Wesentlichen senkrecht zu einer Auflagefläche des mindestens einen Schwenkrads (123, 124) verläuft,
wobei die Steuereinheit (200) dazu konfiguriert ist, eine Anfangsposition und eine Endposition der mit Rädern ausgestatteten Vorrichtung (100) zu ermitteln, wobei die Steuereinheit (200) dazu konfiguriert ist, die mit Rädern ausgestattete Vorrichtung (100) autonom von der Anfangsposition zur Endposition entlang mindestens eines vordefinierten Pfads einer zugehörigen vordefinierten Karte einer geschlossenen Umgebung, in der sich die mit Rädern ausgestattete Vorrichtung (100) bewegt, zu fahren, wobei der vordefinierte Pfad als eine Sammlung von vordefinierten Positionen dargestellt ist und wobei jede vordefinierte Position mittels eines Paars von Koordinaten dargestellt ist, das einem Punkt auf der vordefinierten Karte entspricht,
wobei die Steuereinheit (200) funktionell mit den Antriebsmitteln (120) und mit den Sensormitteln (125, 126) verbunden und dazu eingerichtet ist, ein Korrektursignal zur Steuerung der Antriebsmittel (120) derart zu erzeugen, dass die mindestens zwei Antriebsräder (121, 122) auf der Grundlage des Drehwinkels (θ) des mindestens einen Schwenkrads (123, 124) unabhängig voneinander betrieben werden,
wobei das Korrektursignal dazu eingerichtet ist, die Antriebsmittel (120) derart zu steuern, dass eine Winkelgeschwindigkeitsdifferenz zwischen den mindestens zwei Antriebsrädern (121, 122) auf der Grundlage des Drehwinkels (θ) des mindestens einen Schwenkrads (123, 124) erzeugt wird, wobei die Winkelgeschwindigkeitsdifferenz dazu eingerichtet ist, einen Differenzwert zwischen einer aktuellen Position und einer vordefinierten Position der mit Rädern ausgestatteten Vorrichtung (100) zu minimieren.

5. Steuereinheit (200) nach Anspruch 4, wobei die Steuereinheit (200) dazu eingerichtet ist, die Winkelgeschwindigkeitsdifferenz zwischen den mindestens zwei Antriebsrädern (121, 122) gemäß einer vordefinierten Funktion zu ermitteln, die als Argumente mindestens den Drehwinkel (θ) des mindestens einen Schwenkrads (123, 124) aufweist.

6. Steuereinheit (200) nach Anspruch 4 oder 5, wobei die Steuereinheit (200) dazu eingerichtet ist, die Winkelgeschwindigkeitsdifferenz zwischen den mindestens zwei Antriebsrädern (121, 122) gemäß einem Ausgangssignal eines zuvor trainierten neuronalen Netzes zu ermitteln, das als Eingangssignal mindestens den Drehwinkel (θ) des mindestens einen Schwenkrads (123, 124) aufweist.

7. Autonom fahrende, mit Rädern ausgestattete Vorrichtung (100), die Antriebsmittel (120), die funktionell mit mindestens zwei Antriebsrädern (121, 122) verbunden sind, mindestens ein Schwenkrad (123, 124), das funktionell mit Sensormitteln (125, 126) verbunden ist, und die Steuereinheit (200) nach Anspruch 4 umfasst,
wobei die Sensormittel (125, 126) dazu eingerichtet sind, einen Drehwinkel (θ) des mindestens einen Schwenkrads (123, 124) in Bezug auf eine Drehachse (161) zu erfassen, die im Wesentlichen senkrecht zu einer Auflagefläche des mindestens einen Schwenkrads (123, 124) verläuft.

8. Mit Rädern ausgestattete Vorrichtung (100) nach Anspruch 7, wobei die Steuereinheit (200) dazu eingerichtet ist, die Winkelgeschwindigkeitsdifferenz zwischen den mindestens zwei Antriebsrädern (121, 122) gemäß einer vordefinierten Funktion zu ermitteln, die als Argumente mindestens den Drehwinkel (θ) des mindestens einen Schwenkrads (123, 124) aufweist.

9. Mit Rädern ausgestattete Vorrichtung (100) nach Anspruch 7 oder 8, wobei die Steuereinheit (200) dazu eingerichtet ist, die Winkelgeschwindigkeitsdifferenz zwischen den mindestens zwei Antriebsrädern (121, 122) gemäß einem Ausgangssignal eines zuvor trainierten neuronalen Netzes zu ermitteln, das als Eingangssignal mindestens den Drehwinkel (θ) des mindestens einen Schwenkrads (123, 124) aufweist.

## Revendications

1. - Procédé de correction d'erreurs pendant la conduite autonome d'un appareil équipé de roues (100) comprenant des moyens d'entraînement (120) reliés de manière fonctionnelle à au moins deux roues motrices (121, 122), au moins une roue pivotante (123, 124) reliée de manière fonctionnelle à des moyens de détection (125, 126) et une unité de commande (200) reliée de manière fonctionnelle auxdits moyens d'entraînement (120) et auxdits moyens de détection (125, 126), ledit procédé comprenant :
- une étape (310) dans laquelle l'unité de commande (200) détermine une position initiale de l'appareil équipé de roues (100) ;
- une étape (320) dans laquelle l'unité de commande (200) détermine une position finale de l'appareil équipé de roues (100) ;
- une étape (330) dans laquelle l'unité de commande (200) pilote de manière autonome l'appareil équipé de roues (100) de la position initiale à la position finale en suivant au moins un chemin prédéfini d'une carte prédéfinie associée d'un environnement clos dans lequel l'appareil équipé de roues (100) se déplace, ledit chemin prédéfini étant représenté comme un ensemble de positions prédéfinies et dans lequel chaque position prédéfinie est représentée au moyen d'une paire de coordonnées correspondant à un point sur ladite carte prédéfinie,
ladite étape (330) de conduite autonome de l'appareil équipé de roues (100) comprenant :
- une phase d'acquisition, dans laquelle lesdits moyens de détection (125, 126) acquièrent un angle de rotation (θ) de ladite au moins une roue pivotante (123, 124) par rapport à un axe de rotation (161) sensiblement perpendiculaire à une surface d'appui de ladite au moins une roue pivotante (123, 124) ;
- une phase de génération, dans laquelle ladite unité de commande (200) génère un signal de correction qui commande lesdits moyens d'entraînement (120) de manière à actionner indépendamment lesdites au moins deux roues motrices (121, 122) sur la base de l'angle de rotation (θ) de ladite au moins une roue pivotante (123, 124),
dans lequel, pendant ladite phase de génération, ledit signal de correction commande lesdits moyens d'entraînement (120) de manière à générer une différence de vitesse angulaire entre lesdites au moins deux roues motrices (121, 122) sur la base dudit angle de rotation (θ) de ladite au moins une roue pivotante (123, 124), et dans lequel ladite différence de vitesse angulaire rend minimale une valeur différentielle entre une position actuelle et l'une des positions prédéfinies dudit appareil équipé de roues (100).

2. - Procédé selon la revendication 1, dans lequel ladite unité de commande (200) détermine la différence de vitesse angulaire entre lesdites au moins deux roues motrices (121, 122) conformément à une fonction prédéfinie ayant pour arguments au moins ledit angle de rotation (θ) de ladite au moins une roue pivotante (123, 124).

3. - Procédé selon la revendication 1 ou 2, dans lequel ladite unité de commande (200) détermine la différence de vitesse angulaire entre lesdites au moins deux roues motrices (121, 122) conformément à un signal de sortie d'un réseau neuronal préalablement entraîné ayant comme signal d'entrée au moins ledit angle de rotation (θ) de ladite au moins une roue pivotante (123, 124).

4. - Unité de commande (200) destinée à corriger des erreurs d'odométrie pendant la conduite autonome d'un appareil équipé de roues (100) comprenant des moyens d'entraînement (120) reliés de manière fonctionnelle à au moins deux roues motrices (121, 122) et au moins une roue pivotante (123, 124) reliée de manière fonctionnelle à des moyens de détection (125, 126) conçus pour acquérir un angle de rotation (θ) de ladite au moins une roue pivotante (123, 124) par rapport à un axe de rotation (161) sensiblement perpendiculaire à une surface d'appui de ladite au moins une roue pivotante (123, 124),
l'unité de commande (200) étant configurée pour déterminer une position initiale et une position finale de l'appareil équipé de roues (100), l'unité de commande (200) étant configurée pour piloter de manière autonome l'appareil équipé de roues (100) de la position initiale à la position finale en suivant au moins un chemin prédéfini d'une carte prédéfinie associée d'un environnement clos dans lequel l'appareil équipé de roues (100) se déplace, ledit chemin prédéfini étant représenté comme un ensemble de positions prédéfinies et dans lequel chaque position prédéfinie est représentée au moyen d'une paire de coordonnées correspondant à un point sur ladite carte prédéfinie,
ladite unité de commande (200) étant reliée de manière fonctionnelle auxdits moyens d'entraînement (120) et auxdits moyens de détection (125, 126) et étant conçue pour générer un signal de correction destiné à commander lesdits moyens d'entraînement (120) de manière à actionner indépendamment lesdites au moins deux roues motrices (121, 122) sur la base de l'angle de rotation (θ) de ladite au moins une roue pivotante (123, 124),
dans laquelle ledit signal de correction est conçu pour commander lesdits moyens d'entraînement (120) de manière à générer une différence de vitesse angulaire entre lesdites au moins deux roues motrices (121, 122) sur la base dudit angle de rotation (θ) de ladite au moins une roue pivotante (123, 124), ladite différence de vitesse angulaire étant conçue pour rendre minimale une valeur différentielle entre une position actuelle et une position prédéfinie dudit appareil équipé de roues (100).

5. - Unité de commande (200) selon la revendication 4, dans laquelle ladite unité de commande (200) est conçue pour déterminer la différence de vitesse angulaire entre lesdites au moins deux roues motrices (121, 122) conformément à une fonction prédéfinie ayant pour arguments au moins ledit angle de rotation (θ) de ladite au moins une roue pivotante (123, 124).

6. - Unité de commande (200) selon la revendication 4 ou 5, dans laquelle ladite unité de commande (200) est conçue pour déterminer la différence de vitesse angulaire entre lesdites au moins deux roues motrices (121, 122) conformément à un signal de sortie d'un réseau neuronal préalablement entraîné ayant pour signal d'entrée au moins ledit angle de rotation (θ) de ladite au moins une roue pivotante (123, 124).

7. - Appareil équipé de roues (100) à conduite autonome comprenant des moyens d'entraînement (120) reliés de manière fonctionnelle à au moins deux roues motrices (121, 122), au moins une roue pivotante (123, 124) reliée de manière fonctionnelle à des moyens de détection (125, 126) et l'unité de commande (200) selon la revendication 4,
dans lequel lesdits moyens de détection (125, 126) sont conçus pour acquérir un angle de rotation (θ) de ladite au moins une roue pivotante (123, 124) par rapport à un axe de rotation (161) sensiblement perpendiculaire à une surface d'appui de ladite au moins une roue pivotante (123, 124).

8. - Appareil équipé de roues (100) selon la revendication 7, dans lequel ladite unité de commande (200) est conçue pour déterminer la différence de vitesse angulaire entre lesdites au moins deux roues motrices (121, 122) conformément à une fonction prédéfinie ayant pour arguments au moins ledit angle de rotation (θ) de ladite au moins une roue pivotante (123, 124).

9. - Appareil équipé de roues (100) selon la revendication 7 ou 8, dans lequel ladite unité de commande (200) est conçue pour déterminer la différence de vitesse angulaire entre lesdites au moins deux roues motrices (121, 122) conformément à un signal de sortie d'un réseau neuronal préalablement entraîné ayant pour signal d'entrée au moins ledit angle de rotation (θ) de ladite au moins une roue pivotante (123, 124).
